# EUROPEAN PATENT APPLICATION

(11) **EP 2 086 173 A1**
(43) Date of publication of application: **05.08.2009**
(21) Application number: 08773188.1
(22) Date of filing: 15.07.2008
(51) Int. Cl.: H04L 12/24

(54) **A METHOD, SYSTEM AND NETWORK DEVICE FOR RESOURCE MANAGEMENT**

(30) Priority: 16.07.2007 CN 200710076002
(71) Applicant: Huawei Technologies Co., Ltd., Longgang District, Shenzhen Guangdong 518129 (CN)
(72) Inventor: WEI, Jiahong, Guangdong 518129 (CN); LI, Jun, Guangdong 518129 (CN); MEI, Liubo, Guangdong 518129 (CN)
(74) Representative: Körber, Martin Hans
(86) International application number: PCT/CN2008/071644
(87) International publication number: WO 2009/010008

(57) **Abstract**

A resource management (RM) method, an RM system, and a network equipment are disclosed. The network equipment is directly or indirectly connected to a UE via at least one user link. The network equipment includes a receiving unit and an RM unit. The receiving unit receives a resource request triggered by the UE or a network side equipment when a user requests a first service by the UE. The RM unit includes: a resource admission control module, adapted to provide the UE with a resource admission control function containing the first service according to the resource request; a determination module, adapted to determine whether sufficient available user link resources are reserved for the first service; and a resource coordination module, adapted to coordinate occupied user link resources to meet requirements of the first service if the determination module determines that the available user link resources are insufficient. Through the above solution, the resource admission control is unitedly performed on user line resources in an access equipment, so as to effectively manage the shared user link resources.

## Description

### FIELD OF THE TECHNOLOGY

The present invention relates to a communication technology, and more particularly to a resource management (RM) method, an RM system, and a network equipment.

### BACKGROUND

IPTV video is a type of service with high bandwidth consumption and with no packet loss. However, the network bandwidth, especially user link bandwidth, is usually very limited. Therefore, in order to ensure an efficient implementation of the video services and guarantee the quality of service, resource management (RM) and connection admission control (CAC) functions need to be deployed in the network.

The IPTV services can be divided into two types: multicast/broadcast video (such as BTV) and unicast video (such as VOD) services. The multicast service mode and the unicast service mode are quite different from each other, and the CAC functions thereof are realized in somewhat different ways.

The multicast CAC is generally realized locally at an access node (AN). The AN determines whether the user link bandwidth meets a bandwidth requirement of a request for subscribing a channel or whether the number of the channels subscribed by the user exceeds an upper limit or not, and rejects a channel joining request from the user if the CAC fails (the bandwidth is insufficient or the number of the channels exceeds the upper limit).

The unicast CAC function is generally implemented by an independent RM server. The RM knows about the network topology, and manages an end-to-end bandwidth from a unicast video server to the user. Therefore, once the user requests a unicast video service, a service server requests the RM server for resources, the RM server determines whether the end-to-end bandwidth meets the requirements or not and returns a resource request result, and the service server determines whether to admit the service or not according to the resource request result.

In a solution of the prior art, on a user link, resources are respectively reserved for multicast and unicast services, so that the resources reserved for the multicast service cannot be occupied by the unicast service and the resources reserved for the unicast service cannot be occupied by the multicast service. The AN implements the local multicast CAC function, and the RM implements the end-to-end CAC function from the unicast video server to the user. In this solution, the unicast CAC function and the multicast CAC function are independent from each other and do not interfere with each other, which are also consistent with the current network. However, the multicast and unicast services cannot share the bandwidth resources, thereby resulting in a waste of the bandwidth resources. Moreover, the application scenarios of this solution are quite limited, and only applicable to the applications with sufficient user link bandwidths.

In another solution of the prior art, when the user adds a certain channel, the AN initiatively reports channel information added by the user, and sends the information to the RM directly or through a broadband network gateway (BNG). Then, the RM determines whether the user link bandwidth meets the requirements or not, and if the user link bandwidth does not meet the requirements, the RM notifies the AN to reject the channel adding request from the user. Therefore, in this solution, the AN reports the adding information of the multicast user, and the RM unitedly performs the CAC processing, such that the multicast and unicast implementation manners are unified. However, this solution is complicated. Moreover, as a switching frequency of the multicast service is greater than that of the unicast service, when a large number of TV users frequently switch the channels, a great amount of information exchanges may be caused, which thus has a high requirement on the performance of the AN. In addition, the switching of the multicast service channel needs to interact with the RM, so that the switching motion requires a long time and the user experience is unsatisfactory.

### SUMMARY

Accordingly, embodiments of the present invention provide a resource management (RM) method, an RM system, and a network equipment, in which a resource admission control is unitedly performed on user link resources in a broadband access equipment, so as to effectively manage the shared user link resources.

Embodiments of the present invention provide a network equipment which is directly or indirectly connected to a user equipment (UE) via at least one user link, and includes a receiving unit and an RM unit.

The receiving unit is adapted to receive a resource request triggered by the UE or a network side equipment when a user requests a first service by the UE.

The RM unit includes a resource admission control module, a determination module and a resource coordination module. The resource admission control module is adapted to provide the UE with a resource admission control function containing the first service according to the resource request. The determination module is adapted to determine whether sufficient available user link resources are reserved for the first service. The resource coordination module is adapted to coordinate occupied user link resources to meet requirements of the first service if the determination module determines that the available user link resources are insufficient.

Embodiments of the present invention provide an RM equipment which includes a first resource admission module and a resource request module.

The first resource admission module is adapted to provide a UE that requests for a service with a resource admission control function on a network side link. The resource request module is adapted to send a request to an access network equipment, and request the access network equipment to provide the UE with a resource admission control function on a user link.

Embodiments of the present invention provide an RM system which includes an RM equipment and an access network equipment.

The RM equipment includes a second resource admission control module adapted to provide a UE that requests for a service with a resource admission control function on a network side link.

The access network equipment includes a first receiving module, a first determination module and a first resource coordination module. The first receiving module is adapted to receive a resource request triggered by the UE or the RM equipment. The first determination module is adapted to determine whether sufficient available user link resources are reserved for a first service or not according to the resource request. The first resource coordination module, adapted to coordinate occupied user link resources to meet requirements of the first service if the first determination module determines that the available user link resources are insufficient.

Embodiments of the present invention provide an RM method which includes the following steps.

A resource request triggered by a UE or network side equipment is received, in which the resource request is adapted to reserve user link resources for a first service requested by the UE.

It is determined whether sufficient available user link resources are reserved for the first service, and if sufficient available user link resources are reserved for the first service, the first service is admitted and authorized; otherwise, occupied user link resources are coordinated to meet requirements of the first service.

According to the embodiments of the present invention, the resource admission control is unitedly performed on user link resources in the broadband access equipment, so as to effectively manage the shared user link resources.

### BRIEF DESCRIPTION OF THE DRAWINGS

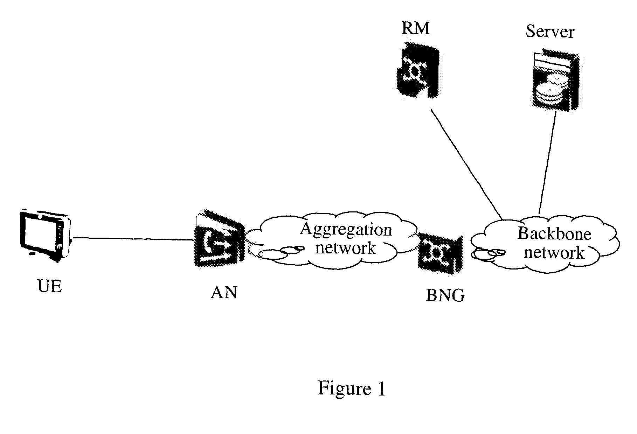

Figure 1 shows an RM system according to an embodiment of the present invention;

Figure 2 shows a flow of a user-demanding unicast VOD service according to an embodiment of the present invention;

Figure 3 shows a flow of a user-demanding unicast VOD service according to an embodiment of the present invention;

Figure 4 shows a flow of a UE-demanding unicast VOD service according to an embodiment of the present invention;

Figure 5 shows a flow of a UE joining a multicast service according to an embodiment of the present invention;

Figure 6 shows a network equipment according to an embodiment of the present invention;

Figure 7 is a structural view of a resource coordination module in a network equipment according to an embodiment of the present invention;

Figure 8 is another structural view of a resource coordination module in a network equipment according to an embodiment of the present invention;

Figure 9 is still another structural view of a resource coordination module in a network equipment according to an embodiment of the present invention;

Figure 10 is a schematic view of an RM equipment according to an embodiment of the present invention; and

Figure 11 is a schematic view of an RM system according to an embodiment of the present invention.

### DETAILED DESCRIPTION

In order to make those of ordinary skill in the art understand and implement the present invention accordingly, embodiments of the present invention are described in detail below with reference to the accompanying drawings.

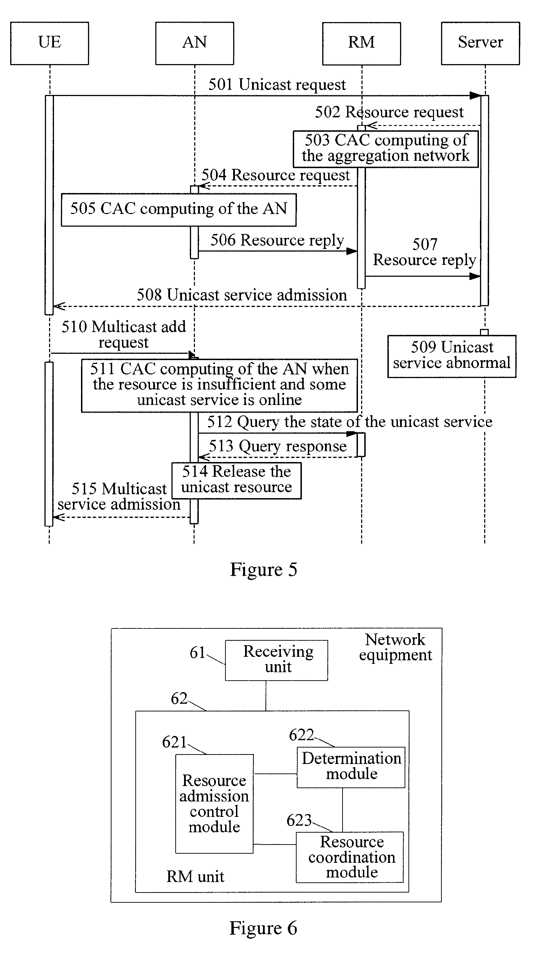

In an embodiment of the present invention, a network equipment, for example, a digital subscriber line access multiplexer (DSLAM), is provided, which is directly or indirectly connected to a UE via at least one user link. Figure 6 is a schematic view of a network equipment according to an embodiment of the present invention. The network equipment includes a receiving unit 61 and an RM unit 62.

The receiving unit 61 is adapted to receive a resource request triggered by the UE or a network side equipment when a user requests a first service through the UE.

The RM unit 62 includes a resource admission control module 621, a determination module 622 and a resource coordination module 623. The resource admission control module 621 is adapted to provide the UE with a resource admission control function containing the first service according to the resource request. The determination module 622 is adapted to determine whether sufficient available user link resources are reserved for the first service or not. The resource coordination module 623 is adapted to coordinate occupied user link resources to meet requirements of the first service if the determination module 622 determines that the available user link resources are insufficient.

In an embodiment of the present invention, the resource admission control is unitedly performed on user link resources in a broadband access equipment, so as to effectively manage the shared user link resources.

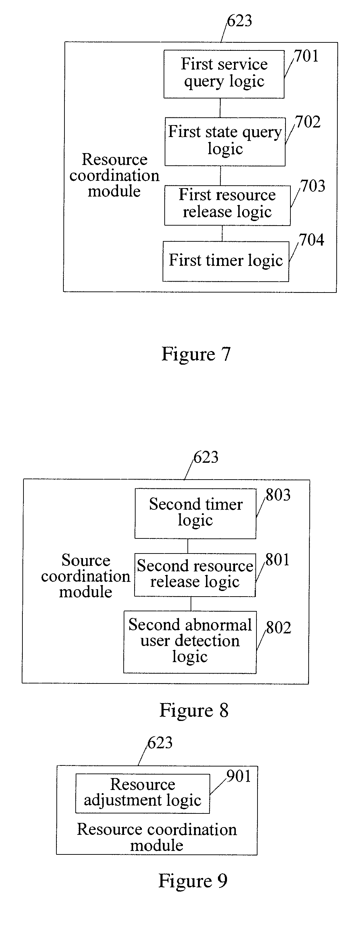

Figures 7 to 9 are schematic views of a resource coordination module in an RM unit according to an embodiment of the present invention.

(1) As shown in Figure 7, the resource coordination module 623 in the RM unit 62 includes a first resource release logic 703, a first service query logic 701 and a first state query logic 702. The first resource release logic 703 is adapted to release occupied user link resources. The first service query logic 701 is adapted to query whether the user link connected to the network equipment has a second service or not. The first state query logic 702 is adapted to query a current online state of the second service and instruct the first resource release logic 703 to release the user link resources occupied by the second service if the second service is currently offline.

Generally, the first service query logic 701 may determine whether the second service has already existed or not by querying a local resource data table or resource database. The first state query logic 702 may send a query packet (for example, a broadcast packet) to each UE, and determines a state of the existing second service according to a response message returned by each UE. The first state query logic 702 may also directly or indirectly query a state of the existed second service from other network side equipments with the service state stored therein. The first service may be identical to the second service, or the first service may be different from the second service. If the two services are identical, they may belong to, for example, different channels of a multicast service. If the two services are different, they may be, for example, a unicast video service and a multicast video service or vice versa, or any combination of a video playback service, video telephone service, video conference service, and data service.

The resource coordination module further includes a first timer logic 704 adapted to set a time length according to a service requirement and instruct the first resource release logic 703 to release corresponding resources when a time-out occurs, so as to effectively release unused resources in time, thus greatly ensuring the resource sharing.

(2) As shown in Figure 8, the resource coordination module 623 may also include a second resource release logic 801and a second abnormal user detection logic 802. The second resource release logic 801 is adapted to release occupied user link resources. The second abnormal user detection logic 802 is adapted to detect whether any abnormal user occupies resources or not and instruct the second resource release logic 801 to release corresponding resources. The abnormal user includes an offline user and/or unauthorized user.

The resource coordination module may further includes a second timer logic 803 adapted to set a time length according to a service requirement and instruct the second resource release logic 801 to release corresponding resources when a time-out occurs, so as to effectively release unused resources in time, thus greatly ensuring the resource sharing.

(3) As shown in Figure 9, the resource coordination module may further include a resource adjustment logic 901 adapted to adjust occupied user link resources to meet requirements of the first service.

For example, without affecting the user's normal operations, the occupied user link resources may be appropriately compressed. That is because the appropriately compressed user link resources do not influence the experience of the user services. Besides, strategies, such as, user priority, service priority, and service attributes, can be adopted to adjust user link resources occupied by some users or by some services.

The first service is a multicast and/or unicast service applicable to a video conference, VoIP, or IP multimedia sub-system.

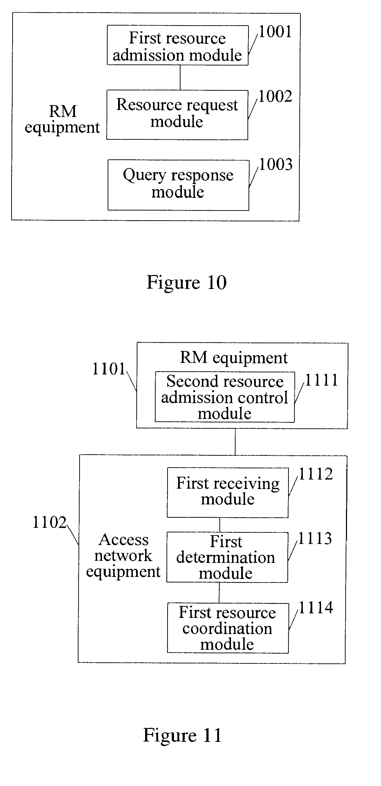

Referring to Figure 10, in an embodiment of the present invention, an RM equipment, for example, an RM server, is provided, which includes a first resource admission module 1001 and a resource request module 1002.

The first resource admission module 1001 is adapted to provide a UE that requests for a service with a resource admission control function on a network side link. The network side links are other network links directly or indirectly communicating with access equipment, including network links of an aggregation network and a core network.

The resource request module 1002 is adapted to send a request to an access network equipment, so as to request the access network equipment to provide the UE with a resource admission control function on a user link.

The RM equipment may further include a query response module 1003 adapted to respond to a query request from the access network equipment and return an online state of a service occupying user link resources to the access network equipment.

Referring to Figure 11, in an embodiment of the present invention, an RM system is further provided, which includes an RM equipment 1101 and an access network equipment 1102.

The RM equipment 1101 includes a second resource admission control module 1111 adapted to provide a UE that requests for a service with a resource admission control function on a network side link.

The access network equipment 1102 includes a first receiving module 1112, a first determination module 1113 and a first resource coordination module 1114. The first receiving module 1112 is adapted to receive a resource request triggered by the UE or the RM equipment. The first determination module 1113 is adapted to determine whether sufficient available user link resources are reserved for a first service or not according to the resource request. The first resource coordination module 1114 is adapted to coordinate occupied user link resources to meet requirements of the first service if the first determination module 1113 determines that the available user link resources are insufficient.

In addition, in an embodiment of the present invention, an RM method is also provided, which includes the following steps.

Step S1: A resource request triggered by a UE or a network side equipment is received, in which the resource request is adapted to request for reserving user link resources for a first service requested by the UE.

Step S2: It is determined whether sufficient available user link resources are reserved for the first service or not according to the resource request. If sufficient available user link resources are reserved for the first service, the first service is admitted and authorized; otherwise, occupied user link resources are coordinated to meet requirements of the first service.

In Step S2, the coordination of the occupied user link resources to meet the requirements of the first service is realized in the following manners.

(1) The coordination of the occupied user link resources to meet the requirements of the first service particularly includes determining whether a second service occupying user link resources is online or not, and if the second service occupying user link resources is offline, the user link resources occupied by the second service are released to meet the requirements of the first service.

After Step S2, the method further includes Step S3: Sending a query request to the UE at least including the occupied user link resources, and determining whether any second service occupying user link resources is offline or not according to a response returned by each UE.

Alternately, after Step S2, the method may further include Step S31: Directly or indirectly sending a query request to a network side equipment that stores a second service state of the occupied user link resources, and determining whether the second service of the occupied user link resources is online or not according to a response returned by the network side equipment.

(2) The coordination of the occupied user link resources to meet the requirements of the first service may further include: Detecting whether any abnormal user occupies resources or not, and if some abnormal user occupies resources, releasing the corresponding resources. The abnormal user includes an offline user and/or an unauthorized user.

(3) The coordination of the occupied user link resources to meet the requirements of the first service may further include: Adjusting the occupied user link resources according to strategies to meet the requirements of the first service.

Additionally, in order to effectively release the unused resources in time and ensure the resource sharing, the method further includes Step S4: Setting a timer protection for an authorized service, and releasing the resources occupied by the authorized service when a time-out occurs.

The implementation of the embodiment of the present invention is further illustrated below through specific application scenarios.

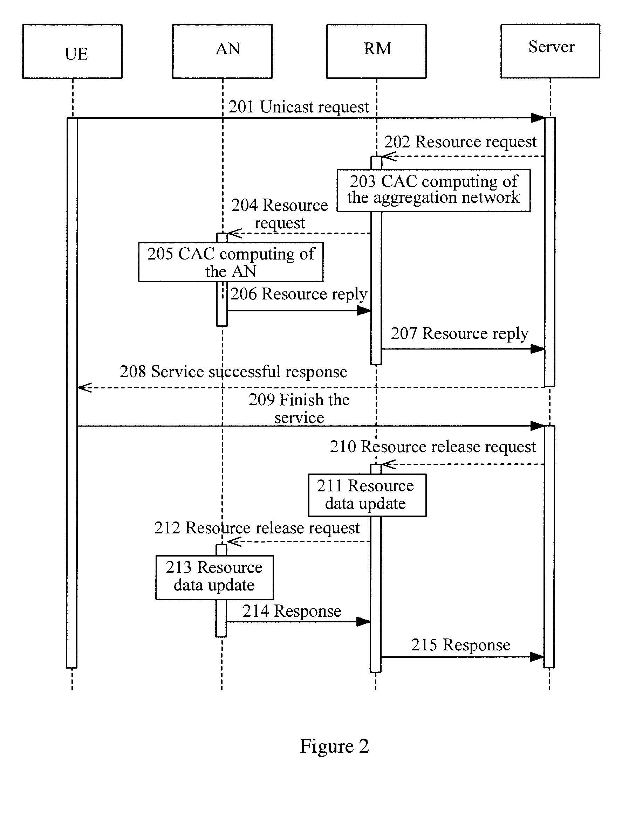

Figure 2 shows a flow of a user-demanding unicast VOD service. A UE may demand a unicast VOD service or watch a multicast TV service.

In Steps 201 to 202, when demanding a unicast VOD service, the UE sends a unicast request to a Server, and upon receiving the unicast request from the UE, the Server sends a resource request to an RM according to the unicast request from the user, so as to request resources for the UE to demand the unicast VOD service.

Steps 203 to 204: Upon receiving the resource request from the Server, the RM performs a CAC computing on an aggregation network, and sends a resource request for user link resources to an access node (AN) after the CAC computing on the aggregation network is finished.

Steps 205 to 206: According to the received resource request, the AN determines that the UE requires the unicast VOD service, then performs a local CAC computing to determine that a local bandwidth is sufficient, reserves a corresponding bandwidth, and sends a resource reply to the RM.

Steps 207 to 208: The RM receives the resource reply from the AN, and sends the resource reply to the Server. Upon receiving the resource reply from the RM, the Server returns a service successful response to the UE, admits the unicast VOD application from the user, and starts providing services.

Steps 209 to 215: When the user finishes the VOD service, the UE notifies the Server to finish the VOD service, the Server sends a resource release request to the RM, the RM updates the resource data and sends the resource release request to the AN, and the AN thus releases the unicast resource, updates the resource data, and returns a response, and the RM responds to the Server for the resource release.

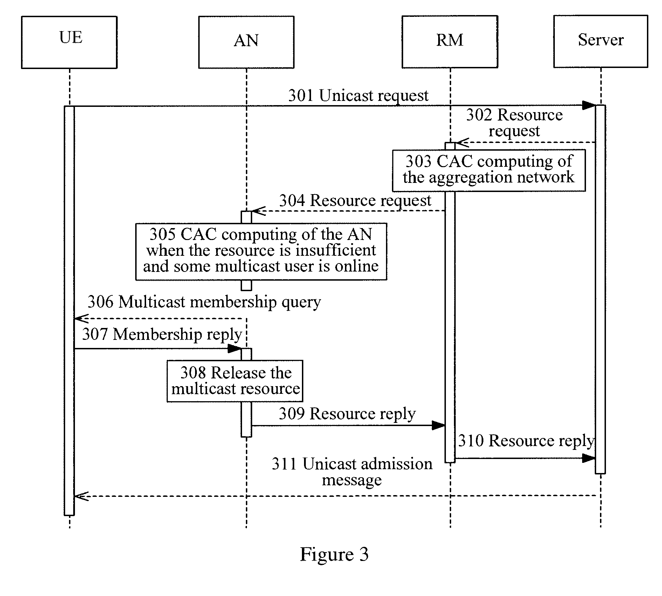

Figure 3 shows a flow of a user-demanding unicast VOD service.

Steps 301 to 302: When the user demands a unicast VOD service via a UE, the UE sends a unicast request to a Server, and upon receiving the unicast request from the UE, the Server sends a resource request to an RM according to the unicast request from the user, so as to request resources for the UE to demand the unicast VOD service.

Steps 303 to 304: Upon receiving the resource request from the Server, the RM performs a CAC computing on an aggregation network, and sends a resource request for user link resources to an AN after the CAC computing on the aggregation network is finished.

Steps 305 to 307: According to the received resource request, the AN determines that the UE requires the unicast VOD service, and then performs a local CAC computing to determine a local bandwidth is insufficient.

In this case, when detecting some multicast service is online, the AN sends a multicast membership query message to each UE connected to the AN, and receives a membership reply returned by each UE.

Here, the AN sends a general query or group-specific query message to the user. If the user does not give a response or the number of responding channels is smaller than that recorded in the system, it is indicated that leave packets of some channels are lost, so that the AN stops forwarding corresponding multicast programs, but releases the resources occupied by the multicast programs, and reserves the released resources for the unicast service.

Steps 308 to 309: The AN determines whether any multicast user is offline or not according to the membership reply from each member, and if some multicast user is offline, the AN releases the resources occupied by the offline user, and sends a resource reply to the RM.

Steps 310 to 311: The RM receives the resource reply from the AN, and sends the resource reply to the Server. Upon receiving the resource reply from the RM, the Server sends a unicast service admission message to the UE, admits the unicast VOD application from the user, and starts providing the service.

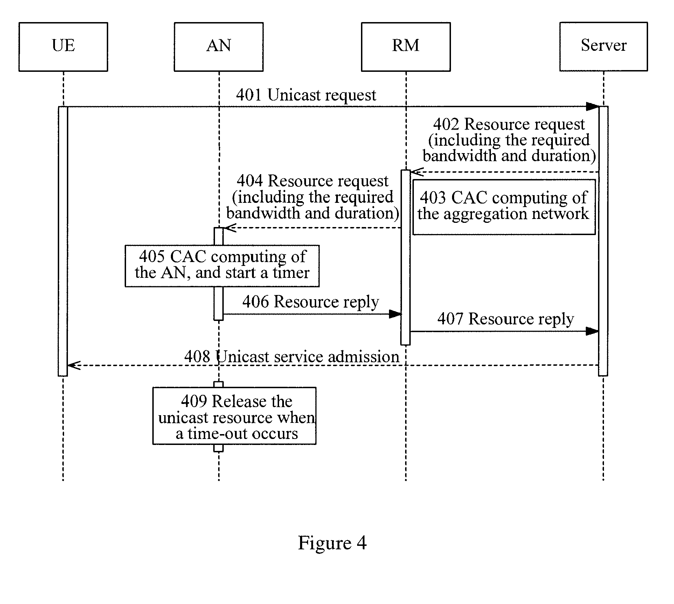

Figure 4 shows a flow of a UE-demanding unicast VOD service.

Steps 401 to 402: When the user demands a unicast VOD service via a UE, the UE sends a unicast request to a Server, and upon receiving the unicast request from the UE, the Server sends a resource request to an RM according to the unicast request from the user, so as to request resources for the UE to demand the unicast VOD service. The resource request message carries a bandwidth required by the unicast video and duration thereof.

Steps 403 to 404: Upon receiving the resource request from the Server, the RM performs a CAC computing on an aggregation network, and sends a resource request for user link resources to an AN after the CAC computing on the aggregation network is finished. The resource request message carries the bandwidth required by the unicast video and the duration thereof.

Steps 405 to 406: According to the received resource request, the AN determines that the UE requires the unicast VOD service, then performs a local CAC computing to determine a local bandwidth is sufficient, reserves a corresponding bandwidth, and sends a resource reply to the RM. Furthermore, the AN starts a protection timer. A duration (time length) of the timer is taken as the time required by the unicast video, or is weighed based on the time required by the unicast video depending upon the actual requirements. For example, the time length is set greater than that required by the unicast video to ensure the integrity of the video demanded by the user, or a part of the time length is set according to the on-demand requirements of the user.

In addition, the motions of reserving the bandwidth, sending the response message, and starting the timer have no particular implementing sequences in time.

Steps 407 to 408: The RM receives the resource reply message from the AN, and sends the resource reply to the Server. The Server admits the unicast VOD application from the user, sends a unicast service admission message to the UE, and starts providing the service.

Step 409: The Server or RM fails under some circumstances and does not send a resource release message. However, once a time-out occurs to the timer of the AN, the AN releases the resources reserved for the unicast service. In this manner, the problem that the resources cannot be released in time and thus results in resource wastes due to the failure of the Sever or RM can be avoided, and the management of the operators on the network service traffic becomes more convenient.

Figure 5 shows a flow of a user joining a multicast service.

Steps 501 to 508: The user demands a unicast VOD service via a UE, and the process is similar to Steps 201 to 208 in Figure 2.

Step 509: The Server or RM fails and does not send a resource release message in certain cases.

Step 510: The user requests to add a multicast channel by the UE.

Steps 511 to 513: The AN receives the request for adding a multicast channel, and performs a CAC computing to determine that a bandwidth is insufficient. Furthermore, once detecting that some unicast service is online, the AN sends a query message to the RM to query a state of the unicast service, and then waits for receiving a response returned by the RM. The RM returns a state of the unicast service according to local information or by querying online conditions of the user unicast service from the Server.

Steps 514 to 515: The AN determines the state of the unicast service according to the response returned by the RM. If the unicast service is offline, the AN releases the unicast resource to meet requirements of the multicast service, and returns a multicast service admission message to the UE.

The network equipment in the above application scenarios may be a broadband access equipment like DSLAM. The UE (or customer premises equipment (CPE)) may be a mobile phone, set-top-box (STB), personal computer (PC), or home gateway (HGW). The user can realize various services by the above UE, such as demanding a unicast video service (for example, VOD), multicast video service (for example, BTV), IP multimedia service, and video telephone service. Other network side equipments storing the service state may be independent RM servers or service servers. In the above method, the UE may be directly connected to a broadband access equipment or indirectly connected to a broadband access equipment by an intermediate gateway equipment.

According to the solution provided by the embodiment of the present invention, the resource admission control is unitedly performed on the user link resources in the broadband access equipment. In the embodiments of the present invention, the multicast service CAC control is realized on the broadband access equipment by inheriting the existing solution, so as to ensure the switching of the multicast service and meet the requirements of the user experience in time. Meanwhile, the unicast service CAC control is realized on the broadband access equipment, such that the multicast service and the unicast service can be sensed and detected by each other, and the shared user link resources can be effectively managed. In the embodiments of the present invention, when the user demands the unicast VOD service, the broadband access equipment realizes the CAC control of a user link, the RM server realizes the CAC control of an aggregation network, and only the broadband access equipment is in communication with the RM server. As the usage frequency of the VOD service is low, unlike the multicast video service (for example, BTV) requiring channel switching frequently, only a few messages are exchanged between the broadband access equipment and the RM server. Moreover, the requirement for the response time of the VOD service is lower than that of the multicast video service, so that the response does not need to be extremely fast. Therefore, this solution does not have an excessively high requirement on the performance of the broadband access equipment, which thus can be easily implemented.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A network equipment, directly or indirectly connected to a user equipment, UE, via at least one user link, comprising:
a receiving unit (61), adapted to receive a resource request triggered by the UE or a network side equipment when a user requests a first service by the UE; and
a resource management, RM, unit (62), comprising: a resource admission control module (621), adapted to provide the UE with a resource admission control function comprising the first service according to the resource request; a determination module (622), adapted to determine whether sufficient available user link resources are reserved for the first service or not; and a resource coordination module (623), adapted to coordinate occupied user link resources to meet requirements of the first service if the determination module determines that the available user link resources are insufficient.

2. The network equipment according to claim 1, wherein the resource coordination module (623) comprises:
a first resource release logic (703), adapted to release the occupied user link resources;
a first service query logic (701), adapted to query whether the user link connected to the network equipment has a second service or not; and
a first state query logic (702), adapted to query a current online state of the second service, and instruct the first resource release logic (703) to release user link resources occupied by the second service if the second service is currently offline.

3. The network equipment according to claim 2, wherein the resource coordination module (623) further comprises:
a first timer logic (704), adapted to set a time length according to a service requirement, and instruct the first resource release logic (703) to release corresponding resources if a time-out occurs.

4. The network equipment according to claim 1, wherein the resource coordination module (623) comprises:
a second resource release logic (801), adapted to release the occupied user link resources; and
a second abnormal user detection logic (802), adapted to detect whether any abnormal user occupies resources or not, and instruct the second resource release logic (801) to release corresponding resources, wherein the abnormal user comprises an offline user and/or an unauthorized user.

5. The network equipment according to claim 4, wherein the resource coordination module (623) further comprises:
a second timer logic (803), adapted to set a time length according to a service requirement, and instruct the second resource release logic (801) to release corresponding resources when a time-out occurs.

6. The network equipment according to claim 1, wherein the resource coordination module (623) comprises: a resource adjustment logic (901), adapted to adjust the occupied user link resources to meet the requirements of the first service.

7. The network equipment according to any one of claims 1 to 6, wherein the first service is a multicast service and/or a unicast service.

8. A resource management, RM, equipment, comprising:
a first resource admission module (1001), adapted to provide a user equipment, UE, that requests for a service with a resource admission control function on a network side link; and
a resource request module (1002), adapted to send a request to an access network equipment to request the access network equipment to provide the UE with a resource admission control function on a user link.

9. The equipment according to claim 8, further comprising:
a query response module (1003), adapted to respond to a query request from the access network equipment and return an online state of a service occupying user link resources to the access network equipment.

10. A resource management, RM, system, comprising:
an RM equipment (1101), comprising: a second resource admission control module (1111), adapted to provide a user equipment, UE, that requests for a service with a resource admission control function on a network side link; and
an access network equipment (1102), comprising: a first receiving module (1112), adapted to receive a resource request triggered by the UE or the RM equipment; a first determination module (1113), adapted to determine whether sufficient available user link resources are reserved for a first service or not according to the resource request; and a first resource coordination module (1114), adapted to coordinate occupied user link resources to meet requirements of the first service if the first determination module (1113) determines that the available user link resources are insufficient.

11. A resource management, RM, method, comprising:
receiving a resource request triggered by a user equipment, UE, or a network side equipment, wherein the resource request is for reserving user link resources for a first service requested by the UE; and
determining whether sufficient available user link resources are reserved for the first service or not, and if sufficient available user link resources are reserved for the first service, admitting and authorizing the first service; otherwise, coordinating occupied user link resources to meet requirements of the first service.

12. The method according to claim 11, wherein the coordinating occupied user link resources to meet requirements of the first service further comprises:
determining whether a second service occupying user link resources is online or not, and if the second service occupying user link resources is offline, releasing user link resources occupied by the second service to meet the requirements of the first service.

13. The method according to claim 12, further comprising:
sending a query request to each UE at least comprising the occupied user link resources, and determining whether any second service occupying user link resources is offline or not according to a response returned by each UE.

14. The method according to claim 12, further comprising:
directly or indirectly sending a query request to a network side equipment storing a state of the second service occupying user link resources, and determining whether the second service occupying user link resources is online or not according to a response returned by the network side equipment.

15. The method according to claim 11, wherein the coordinating occupied user link resources to meet requirements of the first service further comprises:
detecting whether any abnormal user occupies resources or not, and if an abnormal user occupies resources, releasing corresponding resources, wherein the abnormal user comprises an offline user and/or an unauthorized user.

16. The method according to claim 11, wherein the coordinating occupied user link resources to meet requirements of the first service further comprises:
adjusting the occupied user link resources according to strategies to meet the requirements of the first service.

17. The method according to claim 11, further comprising:
setting a timer protection for an authorized service, and releasing resources occupied by the authorized service when a time-out occurs.
